# FASCICULE DE BREVET EUROPEEN

(11) **EP 2 115 290 B1**
(45) Date de publication et mention de la délivrance du brevet: **05.09.2012**
(21) Numéro de dépôt: 07872450.7
(22) Date de dépôt: 27.12.2007
(51) Int. Cl.: F02K 1/28, F02K 1/72, B64D 33/04

(54) **NACELLE DE RÉACTEUR D'AÉRONEF ET AÉRONEF COMPORTANT UNE TELLE NACELLE**
GONDEL FÜR FLUGZEUGDÜSENTRIEBWERK UND FLUGZEUG MIT SOLCH EINER GONDEL
NACELLE FOR AIRCRAFT JET ENGINE AND AIRCRAFT INCLUDING SUCH NACELLE

(30) Priorité: 02.01.2007 FR 0700004
(43) Date de publication de la demande: 11.11.2009
(73) Titulaire: AIRBUS OPERATIONS, 31060 Toulouse (FR)
(72) Inventeur: BULIN, Guillaume, 31700 Blagnac (FR); OBERLE, Patrick, 82600 Verdun Sur Garonne (FR); SURPLY, Thierry, 31700 Cornebarrieu (FR)
(74) Mandataire: Petit, Maxime
(86) Numéro de dépôt international: PCT/FR2007/002176
(87) Numéro de publication internationale: WO 2008/102079

(56) Documents cités:
- FR-A- 1 479 705
- GB-A- 1 357 370
- US-A- 5 655 360

## Description

L'invention est relative à une nacelle de réacteur d'aéronef équipée d'un système à tuyère variable.

Les systèmes à tuyère variable ont été initialement développés pour des applications aéronautiques militaires.

Ces systèmes permettent d'améliorer de façon significative les performances thermodynamiques d'une turbomachine.

Traditionnellement, les turbomachines montées sur des avions de ligne ne sont pas équipées de système à tuyère variable.

En effet, les systèmes traditionnels à tuyère variable induisent des contraintes de dimensionnement très importantes qui sont directement liées au périmètre de la tuyère dont la section doit être modifiée.

Or, les turbomachines équipant les avions de ligne se caractérisent par des taux de dilution élevés sensiblement situés entre 4 et 8 et qui engendrent des diamètres de tuyère relativement importants.

Pour cette raison l'intégration sur des avions de ligne de systèmes à tuyère variable traditionnels risque d'augmenter de façon significative la complexité et la masse de la nacelle de réacteur, tout en détériorant les qualités aérodynamiques de l'ensemble propulsif, ce qui n'est pas acceptable.

Le document FR 1 479 705 décrit une nacelle de réacteur d'aéronef comprenant une paroi de nacelle entourant de façon concentrique un réacteur et définissant avec ce dernier un conduit annulaire d'écoulement interne de fluide.

La paroi de nacelle comporte une partie de paroi amont fixe et une partie de paroi aval mobile sous l'action de vérins.

Lors du déplacement de la partie aval mobile, des ouvertures sont créées entre les deux parties de la paroi et une buse annulaire, aménagée en périphérie interne du canal annulaire, injecte de l'air déviant l'air provenant du ventilateur à travers les ouvertures ainsi créées, de façon à favoriser l'inversion de poussée.

Le document US 5 655 360, ainsi que GB 1 357 370 décrivent chacun une nacelle de réacteur d'aéronef comprenant une paroi de nacelle entourant de façon concentrique un réacteur et définissant avec ce dernier un conduit annulaire d'écoulement interne de fluide.

La paroi de nacelle comporte une partie de paroi amont fixe et une partie de paroi aval mobile sous l'action de vérins.

Lors du déplacement de la partie aval mobile, une ouverture est créée entre les deux parties de la paroi et des portes d'obstruction sont déployées dans le canal annulaire afin de dévier l'air provenant du ventilateur à travers l'ouverture, de façon à favoriser l'inversion de poussée.

La présente invention a pour objet une nacelle de réacteur d'aéronef à haut taux de dilution dans laquelle est installé un réacteur d'axe longitudinal, la nacelle comportant une paroi entourant de façon concentrique au moins partiellement le réacteur et définissant avec ce dernier un conduit annulaire d'écoulement interne de fluide présentant, à une extrémité dite aval de la paroi de la nacelle, une section de passage de sortie d'écoulement, caractérisée en ce que la nacelle comporte des moyens de déplacement, sur commande, d'une partie de la paroi de la nacelle pour faire varier la section de passage de sortie d'écoulement, ce déplacement créant dans la paroi de la nacelle au moins une ouverture d'extension longitudinale, la nacelle comportant un dispositif de formation d'une barrière fluidique (fi) qui s'étend suivant une moins une partie de l'extension longitudinale de ladite au moins une ouverture afin de s'opposer à l'échappement naturel, à travers ladite au moins une ouverture, d'une partie de l'écoulement qualifiée d'écoulement de fuite.

En faisant varier la section de passage de sortie de l'écoulement par déplacement d'une partie de la paroi de la nacelle on réalise de façon simple et légère une tuyère à section variable sur une turbomachine à haut taux de dilution, voire à très haut taux de dilution.

En outre, le dispositif fluidique permet de façon simple de limiter, voire d'empêcher le passage naturel d'une partie de l'écoulement interne (fuites) à travers la ou les ouvertures ménagées dans la paroi. En effet, le dispositif crée dans la ou les ouvertures, ou à proximité de l'entrée de celle(s)-ci, un obstacle sous la forme d'une circulation contrôlée de fluide. Cet écran fluidique s'étend longitudinalement suivant l'extension longitudinale de l'ouverture ou des ouvertures. La présence de cet obstacle fluidique canalise ainsi, dans le conduit annulaire, l'écoulement interne de fluide.

L'écoulement de fuite ne peut donc pas prendre naissance en s'échappant de la nacelle par la ou les ouvertures créées (à l'exception toutefois, dans certaines circonstances, d'une très faible quantité d'écoulement non significative). Ainsi, grâce à l'invention, la quasi-totalité de l'écoulement interne de fluide contribue à la poussée du réacteur et ce, de façon directe. L'invention permet donc d'augmenter l'efficacité du réacteur équipé d'un système à tuyère variable par rapport à un réacteur muni d'un système à tuyère variable dans lequel la totalité de l'écoulement de fuite s'échapperait par la ou les ouvertures créées par le mécanisme de la tuyère variable.

En empêchant la quasi-totalité de cet écoulement de fuite de se produire on réduit significativement les pertes aérodynamiques par rapport à un réacteur qui serait uniquement pourvu d'un système à tuyère variable sans barrière fluidique : les phénomènes de turbulence sont quasiment annulés, diminuant par là-même la trainée. Les performances aérodynamiques de l'ensemble propulsif sont donc améliorées.

Avec une turbomachine à haut taux de dilution, le diamètre de la soufflante est très important, si bien que la variation de la section de passage de sortie d'écoulement pouvant être engendrée est suffisamment importante pour avoir une forte incidence sur le comportement de la soufflante. L'efficacité du système propulsif est alors augmentée durant chaque phase de vol.

Par ailleurs, l'adaptation d'un système à tuyère variable sur des turbomachines montées sur avions de ligne permet de diminuer, dans les phases de vol à basses vitesses (décollage, approche et atterrissage), les vitesses d'éjection de l'air en aval de la turbomachine, diminuant d'autant les émissions sonores associées. Cet avantage est un paramètre déterminant dans le contexte aéronautique actuel où les contraintes acoustiques sont de plus en plus drastiques vis-à-vis des avions de ligne.

Un système à tuyère variable présente donc de nets avantages en termes de performances aérodynamiques et thermodynamiques lorsqu'il est intégré sur une turbomachine à haut, voire à très haut taux de dilution.

Selon une caractéristique, le dispositif de formation d'une barrière fluidique comporte des moyens d'injection d'un fluide à haute énergie au droit de ladite au moins une ouverture.

Ce dispositif fluidique, simple et efficace, fait appel à des moyens fixes d'injection de fluide et l'énergie utilisée peut provenir de la nacelle elle-même (ex : air sous pression venant du réacteur).

Au moins un des paramètres thermodynamiques et aérodynamiques du fluide injecté permet de contrôler la direction donnée à l'écoulement de fluide injecté et la quantité de cet écoulement.

On notera que le ou les mêmes paramètres thermodynamiques et aérodynamiques peuvent être utilisés pour contrôler tant l'orientation de l'écoulement de fluide injecté que la quantité de celui-ci.

De façon générale, l'efficacité de l'inducteur fluidique (pourcentage de fuites contrôlées par rapport aux fuites totales sans dispositif fluidique) est fonction des propriétés aérodynamiques (vitesse, taux de turbulence, etc.) et thermodynamiques (pression, température, débit...) du fluide à haute énergie injecté.

Selon un mode de réalisation, la nacelle comporte également un dispositif fluidique de prélèvement contrôlé d'au moins une partie d'écoulement interne de fluide pour l'évacuer hors de la nacelle à travers ladite au moins une ouverture.

La nacelle comporte ainsi deux dispositifs fluidiques aux fonctionnements différents et non simultanés : l'un pour s'opposer au passage de tout ou partie de l'écoulement de fuite à travers ladite au moins une ouverture et l'autre pour prélever de façon contrôlée une quantité d'écoulement interne et l'évacuer selon une direction contrôlée (vers l'amont, transversalement ou vers l'aval).

Selon une caractéristique, le dispositif fluidique de prélèvement contrôlé comporte des moyens d'injection d'un fluide à haute énergie dans l'écoulement interne de fluide.

Selon une caractéristique, les moyens d'injection sont agencés en amont et/ou en aval de ladite au moins une ouverture.

Selon une caractéristique, des moyens d'injection sont agencés sur une face interne et/ou une face externe de la paroi de la nacelle qui délimite le conduit annulaire à sa périphérie externe.

Lorsque des moyens d'injection sont agencés sur une face interne et sur une face externe de la paroi de la nacelle, on dispose ainsi d'une double circulation contrôlée de fluide : la circulation contrôlée grâce au fluide injecté à partir de la face externe de la paroi pour former un obstacle fluidique dans la ou les ouvertures et la circulation contrôlée grâce au fluide injecté à partir de la face interne afin de réaliser un système fluidique d'inversion de poussée.

On notera toutefois que la deuxième circulation contrôlée agissant depuis la face interne de la paroi peut alternativement être utilisée, elle aussi, pour former un obstacle fluidique au droit de ladite au moins une ouverture.

Selon une caractéristique, le dispositif de formation d'une barrière fluidique comporte au moins un élément de déflection mobile du fluide injecté qui est disposé de façon adjacente aux moyens d'injection agencés sur la face interne de la paroi de la nacelle, au moins en partie dans ladite au moins une ouverture.

L'élément de déflection sert à dévier l'écoulement de fluide injecté afin de lui donner une direction sensiblement parallèle à la face interne de la paroi. Sans cet élément distinct de la paroi l'écoulement de fluide injecté collerait à la surface tangentielle à l'extrémité débouchante des moyens d'injection.

Le fluide injecté et ainsi orienté de façon contrôlée forme une barrière fluidique qui s'écoule à la périphérie de l'écoulement interne, au droit de ladite au moins une ouverture.

Plus particulièrement, le fluide est injecté depuis une zone située en amont de ladite au moins une ouverture.

Selon une caractéristique, ledit au moins un élément de déflection obture une zone dite amont de ladite au moins une ouverture, laissant ainsi libre une zone dite aval de celle-ci.

L'écoulement de fluide injecté et ainsi dévié par l'élément de déflection adopte une trajectoire qui est sensiblement parallèle à cet élément et circule au droit de la zone amont de l'ouverture, c'est-à-dire le long de l'élément de déflection, et le long de la zone aval de l'ouverture afin de masquer cette zone vis-à-vis de l'écoulement interne.

Selon une caractéristique, ledit au moins un élément de déflection est apte à être logé dans un évidement de la partie mobile de paroi de la nacelle.

Cette disposition permet d'obtenir, en position repliée, des lignes aérodynamiques internes à la nacelle qui limitent la trainée aérodynamique de l'ensemble propulsif.

Lorsque des moyens d'injection sont agencés en aval de ladite au moins une ouverture, ces moyens d'injection sont, par exemple, agencés sur une face externe de la paroi de la nacelle et sont aptes à créer une barrière fluidique suivant l'extension longitudinale de ladite au moins une ouverture.

Selon une caractéristique, le dispositif fluidique comporte au moins une tuyère d'injection d'un fluide à haute énergie.

Selon une caractéristique, ladite au moins une tuyère d'injection a une forme annulaire ou semi-annulaire.

Selon une caractéristique, ladite au moins une tuyère d'injection communique avec un canal d'amenée du fluide qui est au moins partiellement aménagé dans la paroi de la nacelle.

Selon une caractéristique, l'injection de fluide est effectuée de façon continue ou pulsée.

Selon une caractéristique, le dispositif comporte une surface incurvée, aménagée tangentiellement à l'extrémité débouchante des moyens d'injection, de façon à diriger le fluide injecté vers ladite au moins une ouverture.

La surface incurvée (convexe) permet de dévier le jet de fluide à haute énergie qui est injecté tangentiellement à cette surface.

On notera que lorsque les moyens d'injection sont agencés sur la face externe de la paroi de la nacelle, le fluide est injecté vers le conduit annulaire de façon à bloquer le passage à tout ou partie de l'écoulement de fuite.

Selon une caractéristique, à l'intérieur du conduit annulaire, le réacteur a une face externe et la partie déplaçable de la paroi de nacelle a une face interne qui coopèrent l'une avec l'autre pour provoquer une variation de la section de passage de sortie d'écoulement lorsque ladite partie de paroi s'est déplacée.

Selon une caractéristique, la partie déplaçable de la paroi de la nacelle est une partie aval de cette paroi qui inclut le bord de fuite de celle-ci et qui est apte à se déplacer longitudinalement le long du conduit annulaire, par translation vers l'aval, entre une première position, dans laquelle aucune ouverture n'est créée, et une seconde position, dans laquelle la ou les ouvertures sont créées.

Le système de tuyère à translation est le système le moins pénalisant à intégrer sur un réacteur à fort taux de dilution en termes de complexité, de masse et de trainée aérodynamique. En effet, en utilisant ce système, la cinématique de la tuyère se réduit à une simple translation, selon l'axe du réacteur, de la partie arrière de la nacelle. En outre, les écoulements aérodynamiques interne et externe à la nacelle ne sont que peu perturbés en position repliée.

L'invention a également pour objet un aéronef comprenant au moins deux nacelles de réacteur, chaque nacelle étant conforme à au moins un des aspects de la nacelle brièvement décrits ci-dessus.

D'autres caractéristiques et avantages apparaitront au cours de la description qui va suivre, donnée uniquement à titre d'exemple non limitatif et faite en référence aux dessins annexés, sur lesquels :
- la figure 1 est une vue générale schématique d'un aéronef selon l'invention ;
- la figure 2 est une vue schématique en coupe longitudinale d'une nacelle d'aéronef selon un premier mode de réalisation de l'invention ;
- la figure 3 est une vue schématique partielle agrandie du dispositif fluidique de la figure 2 ;
- les figures 4 et 5 sont des vues schématiques partielles d'un mécanisme de déplacement de la partie arrière de la paroi de la nacelle respectivement en positions repliée et étendue ;
- la figure 6 représente une vue schématique partielle en coupe longitudinale (analogue à celle de la figure 3) d'une paroi de nacelle de réacteur d'aéronef selon un deuxième mode de réalisation de l'invention ;
- la figure 7 illustre un autre mode de fonctionnement du mode de réalisation représenté sur la figure 6 ;
- les figures 8a, 8b, 8c, 9a, 9b, 9c, 10a, 10b, 10c illustrent respectivement plusieurs vues différentes d'une nacelle selon un troisième mode de réalisation et plusieurs modes de fonctionnement différents de la nacelle ;
- la figure 11 représente une vue schématique partielle en coupe longitudinale (analogue à celle des figures 6 et 7) d'une paroi de nacelle selon un quatrième mode de réalisation.

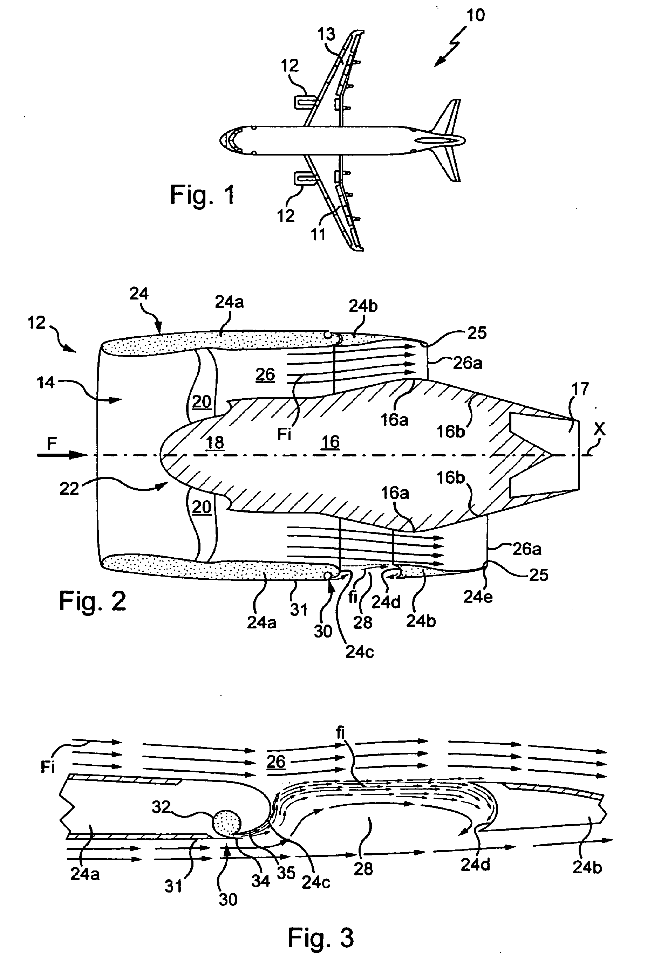

Comme représenté sur la figure 1 et désigné de façon générale par la référence notée 10, un aéronef commercial (avion de ligne) comporte plusieurs nacelles de réacteur 12 fixées sous la voilure principale de l'aéronef.

On dénombre, par exemple, sur l'aéronef 10 deux nacelles de réacteur fixées chacune à une des ailes latérales 11, 13 mais, selon les modèles d'aéronef, plusieurs nacelles peuvent être fixées à une même aile.

Par ailleurs, il peut être envisagé de fixer les nacelles de réacteur directement sur le fuselage, soit de part et d'autre du fuselage, soit sur la partie supérieure arrière du fuselage.

Comme représenté sur la figure 2, l'une des nacelles 12 selon l'invention est présentée de façon schématique en coupe longitudinale.

Un réacteur 14, d'axe longitudinal X, installé à l'intérieur de la nacelle comprend une turbomachine 16 comportant en entrée, du côté amont (à gauche sur la figure), un arbre 18 sur lequel sont montées les pales 20 d'une soufflante 22. La turbomachine est de type à double flux et à haut taux de dilution (taux supérieur ou égal à 5).

On notera que l'invention s'applique également à des turbomachines ayant un très haut taux de dilution (proche de 10).

La nacelle 12 entoure le réacteur 14 précité dans sa partie amont, tandis que sa partie aval fait saillie par rapport à la partie aval de la nacelle comme représenté partiellement sur la figure 2.

Plus particulièrement, la nacelle 12 comporte une paroi 24 qui entoure de façon concentrique le réacteur de façon à ménager avec ce dernier un conduit annulaire 26 dans lequel s'écoule un fluide qui, ici, est de l'air.

Comme représenté sur la figure 2, l'écoulement d'air, symbolisé par la flèche F arrivant en entrée de la nacelle, pénètre à l'intérieur de celle-ci et un premier flux, appelé flux primaire, pénètre dans la turbomachine 16 pour participer à la combustion et entraîner l'arbre 18 et donc la soufflante 22 en rotation. Ce flux primaire est ensuite éjecté par la tuyère 17 du moteur et contribue ainsi à une partie de la poussée de la turbomachine.

Un deuxième flux d'air, appelé flux secondaire, propulsé par l'hélice, emprunte le conduit annulaire 26 et s'échappe par la partie aval 26a de la nacelle, constituant ainsi la grande partie de la poussée du système propulsif.

Il convient de noter que la paroi 24 de la nacelle est réalisée en deux parties : une partie dite amont 24a réalisant le carénage aérodynamique de la partie avant de la turbomachine et une partie dite aval 24b incluant le bord de fuite de la paroi de la nacelle et qui est mobile en translation longitudinale (suivant la direction X) par rapport à la première partie fixe.

Comme représenté sur la figure 2, la seconde partie 24b est représentée en partie haute de cette figure, dans une première position dite repliée et pour laquelle l'écoulement interne Fi au conduit annulaire 26 traverse ce dernier en étant guidé par la paroi de la nacelle jusqu'à son extrémité débouchante aval 26a. Cette position est utilisée dans des phases de vol où l'invention n'est pas mise en oeuvre.

On notera que la turbomachine 16 a une surface externe 16a dont le diamètre augmente au fur et à mesure de la progression le long du conduit 26 jusqu'à l'extrémité aval 26a (partie haute de la figure 2). La forme de la surface externe 16a de la turbomachine s'apparente à une portion de cône (forme tronconique) dont le sommet est situé vers l'amont.

La surface interne de la partie aval 24b présente, pour sa part, une diminution de diamètre le long du conduit dans la partie proche de l'extrémité aval 26a et jusqu'à celle-ci. La forme de cette partie 25 de la surface interne s'apparente à une portion de cône dont le sommet est situé vers l'aval.

La partie aval 24b de la paroi de la nacelle se déplace sur commande (par exemple à partir d'un signal envoyé du poste de pilotage), par translation continue ou non (par exemple sous l'action de vérins hydrauliques montés dans la partie de paroi 24a parallèlement à l'axe X), de la première position repliée à une seconde position dite déployée représentée en partie basse de la figure 2.

Dans la seconde position déployée, une ouverture radiale ou annulaire 28 est créée dans la paroi 24. Cette ouverture est aménagée entre les parties amont 24a et aval 24b à la périphérie externe du conduit annulaire 26 et possède une dimension ou extension longitudinale parallèle à l'axe longitudinal X.

Il convient de noter que la partie aval 24b de la paroi de la nacelle peut être constituée de plusieurs portions semi-annulaires (en forme de portions d'anneau) dont la réunion forme un anneau complet et qui peuvent se déplacer chacune de façon indépendante.

Le déplacement vers l'aval de chaque portion semi-annulaire crée ainsi une ouverture semi-annulaire différente dans la paroi de la nacelle.

Ce déplacement a pour but de faire varier la section de passage de sortie pour l'écoulement à l'intérieur de la tuyère définie par la face interne de la paroi aval 24b et la face externe en regard de la turbomachine 16.

Ainsi, lorsque la partie aval 24b s'est déplacée vers l'arrière (partie basse de la figue 2), la section de passage de sortie pour l'écoulement de fluide à l'extrémité aval 26a est augmentée : un divergent se forme entre la partie 25 de la surface interne de la paroi aval 24b et la zone 16b de la surface externe de la turbomachine située en aval de la région de diamètre maximal. Il s'ensuit une variation du taux de détente de l'écoulement interne qui induit une poussée maximale.

On notera que la partie amont 24a et la partie aval 24b de la paroi de la nacelle présentent au niveau de leurs zones d'extrémité destinées à entrer en contact l'une avec l'autre (zone de jonction) des formes complémentaires, afin que l'ensemble constitué des deux parties soit jointif lorsqu'elles sont en contact l'une avec l'autre (partie haute de la figure 2).

Ainsi, les deux parties 24a et 24b présentent, à leurs zones d'extrémité en regard, deux faces respectives aux courbures inversées : la surface d'extrémité 24c de la partie avant 24a est convexe, tandis que la surface d'extrémité 24d de la partie aval 24b est concave (figures 2 et 3).

Comme représenté en partie basse de la figure 2 et sur la figure 3, lorsque les deux faces d'extrémité 24c et 24d sont disjointes, elles bordent l'ouverture 28.

La face d'extrémité 24d est confondue avec la face externe 24e de la partie aval 24b au niveau de la jonction entre les deux parties 24a et 24b.

On notera que la partie aval 24b se rétrécit vers l'aval, à partir de la face d'extrémité 24d, au fur et à mesure que l'on se rapproche d'une pointe effilée 24e qui forme un bord de fuite.

Par ailleurs, en l'absence de dispositif supplémentaire une faible partie de l'écoulement interne du fluide Fᵢ circulant dans le conduit 26 pourrait s'échapper, naturellement, de façon radiale par l'ouverture 28.

Cette fraction d'écoulement est qualifiée d'écoulement de fuite.

Un dispositif fluidique 30 est prévu dans la paroi de la nacelle pour créer un obstacle fluidique destiné à s'opposer à tout ou partie de cet écoulement de fuite.

Comme représenté sur la figure 2 (et de façon plus détaillée sur la figure 3), le dispositif fluidique 30 est par exemple agencé dans la partie fixe 24a de la paroi de la nacelle c'est-à-dire en amont de l'ouverture 28, et au niveau de la zone de jonction entre les parties 24a et 24b.

Le dispositif 30 est agencé sur la face externe 31 de la partie de paroi amont 24a de la nacelle.

Le dispositif 30 comporte des moyens qui permettent d'injecter au droit de l'ouverture 28, vers le conduit annulaire, un fluide à haute énergie lorsque le ou les éléments mobiles de la nacelle se sont déplacés pour réaliser la variation de section de la tuyère à section variable.

Cette injection de fluide est effectuée de façon sensiblement tangentielle à la face externe 31 de la partie amont 24a.

Plus particulièrement, le dispositif fluidique 30 comporte, à proximité de la face d'extrémité 24c de la partie amont 24a, un canal d'amenée du fluide à haute énergie, qui est par exemple de l'air sous pression provenant du réacteur.

Ce canal d'amenée de fluide comporte une partie non représentée qui communique avec la source d'air sous pression de la turbomachine 16 ou avec un générateur auxiliaire d'énergie pneumatique (ex : compresseur).

Le canal comporte également une partie annulaire 32 partiellement représentée en coupe sur les figures 2 et 3. Ce canal 32 s'étend à la périphérie de l'ouverture 28 et est réalisé sous la forme d'un ou de plusieurs arcs de tore ou bien d'un tore complet agencé sur la face externe 31 de la partie de paroi amont de la nacelle.

Le dispositif fluidique 30 comporte en outre une ou plusieurs tuyères d'injection 34 qui communiquent avec le canal 32 et débouchent sur la face externe 31 à l'endroit où commence la face d'extrémité 24c.

On injecte ainsi dans l'ouverture 28, depuis l'amont, un fluide à haute énergie qui forme une barrière fluidique fᵢ fermant, ou en tout cas, limitant l'accès à l'ouverture pour l'écoulement interne Fᵢ (figure 3).

Cette barrière fluidique s'étend suivant toute la dimension longitudinale de l'ouverture 28, occupant ainsi quasiment tout l'espace qu'aurait pu emprunter l'écoulement Fᵢ pour s'échapper par l'ouverture.

Sur la figure 3, le fluide injecté circule dans le même sens que l'écoulement interne Fᵢ.

Une surface incurvée 35 est aménagée à la sortie de la tuyère d'injection 34, tangentiellement à cette dernière et constitue la surface de la face d'extrémité 24c. Cette surface a, par exemple, une forme semi-circulaire.

On notera que, lorsque le canal est réalisé sous la forme de sections toriques (arcs de tore) ou bien d'un tore complet, la tuyère peut prendre la forme d'une fente et s'étendre suivant toute la longueur de la section de tore (tuyère de forme semi-annulaire) ou du tore complet (tuyère de forme annulaire).

Pour une même section de tore ou pour le tore complet, il est également possible d'avoir plusieurs tuyères d'injection disjointes réparties sur la section considérée ou sur le tore.

Comme représenté sur les figures 2 et 3, le fluide sous pression véhiculé par le canal 32 est introduit sous la forme d'un jet dans l'ouverture par la tuyère d'injection 34, tangentiellement à la face externe 31.

Le jet ainsi injecté sort de la tuyère avec une orientation donnée, tangentiellement à la surface incurvée 35, puis épouse la forme de cette surface (figure 3), dans la mesure où la force centrifuge qui tend à l'en décrocher est équilibrée par la dépression apparaissant entre la paroi et le jet.

Comme représenté sur la figure 3, le jet injecté à travers la tuyère d'injection 34 est dévié par la surface 35 en direction du conduit annulaire 26.

L'apport d'énergie du fluide injecté par la tuyère d'injection 34 permet de contrôler la direction du jet de fluide injecté.

L'orientation du jet varie en fonction d'au moins un des paramètres thermodynamiques et aérodynamiques du fluide, à savoir par exemple la pression et/ou la température et/ou le débit et/ou la vitesse et/ou le taux de turbulence...

Le jet de fluide injecté par le dispositif fluidique et qui s'étend longitudinalement à l'entrée de l'ouverture permet de canaliser, par induction aérodynamique, l'écoulement interne de fluide Fᵢ au niveau de l'ouverture 28, sensiblement parallèlement à la face interne de la paroi de la nacelle, en s'opposant à ce qu'un écoulement de fuite prenne naissance à travers l'ouverture.

L'écoulement Fᵢ est ainsi canalisé à sa périphérie jusqu'à l'extrémité débouchante 26a comme s'il n'y avait aucune ouverture radiale dans la paroi de la nacelle.

La barrière fluidique (circulation contrôlée de fluide) constitue en quelque sorte une paroi artificielle située dans le prolongement de la partie de paroi amont 24a et qui ferme l'ouverture 28.

De cette façon, l'invention permet d'amplifier la poussée en jet direct par rapport à la poussée en jet direct qui serait obtenue avec une nacelle équipée d'un système à tuyère variable sans barrière fluidique.

Cette contribution avantageuse de la quasi-totalité de l'écoulement interne Fᵢ au bilan global de poussée du réacteur permet d'augmenter le rendement général propulsif de la tuyère variable à translation.

A titre d'exemple, en choisissant un débit et une pression du fluide inducteur élevés, le jet de fluide adhère à la surface 35 et, de façon générale, à la totalité ou quasi-totalité de la face externe 24c.

On notera que l'on peut modifier un seul des paramètres thermodynamiques et aérodynamiques, par exemple le débit, pour constituer une barrière fluidique efficace.

En faisant varier la taille de l'orifice d'injection en sortie de la tuyère d'injection, par exemple, grâce à un agencement de type diaphragme, on peut faire varier la vitesse d'injection et donc le débit du fluide injecté.

Par ailleurs, lorsque le dispositif fluidique est activé, l'injection de fluide peut être réalisée soit en flux continu, soit en flux pulsé pour limiter la consommation de fluide injecté.

Il convient de noter que les efforts aérodynamiques liés au fonctionnement du dispositif selon l'invention se concentrent principalement sur le dispositif fluidique 30 agencé de façon annulaire sur la paroi de la nacelle, ce qui permet de mieux répartir dans la structure de la nacelle les efforts à transmettre et, ainsi, d'optimiser la géométrie et la masse de la structure de la nacelle.

Par ailleurs, l'intégration du dispositif fluidique sur la paroi de la nacelle n'a que très peu d'influence sur le traitement acoustique interne et externe de cette dernière.

En effet, dans la position repliée représentée en partie haute de la figure 2, le dispositif selon l'invention autorise l'intégration d'un revêtement acoustique pariétal sur la quasi-totalité des faces interne et externe de la paroi de la nacelle.

En outre, la taille du dispositif fluidique 30 est relativement petite ce qui facilite son intégration dans cette dernière.

On notera que le positionnement du dispositif fluidique 30 en amont de l'ouverture 28 permet à ce dernier de former une barrière fluidique particulièrement efficace et de façon simple.

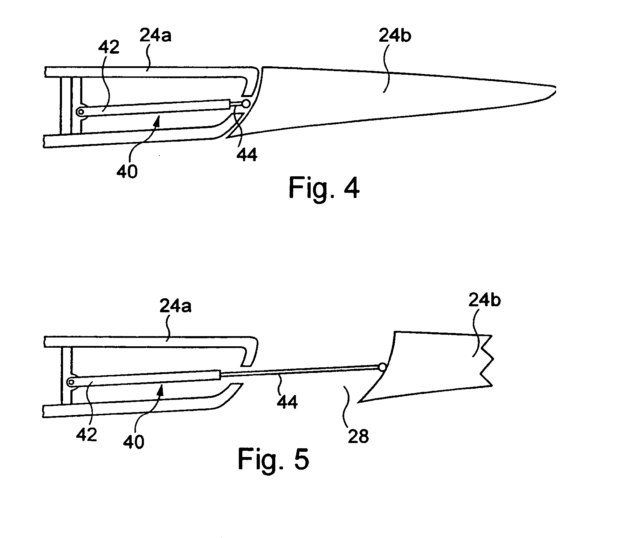

On a représenté sur la figure 4 un mode de réalisation d'un moyen de déplacement par translation de la partie arrière 24b de la paroi de la nacelle.

Un logement interne aménagé dans la partie amont 24a, dans une zone où le dispositif fluidique 30 n'est pas présent, accueille un vérin à double effet 40, par exemple de type pneumatique ou hydraulique.

La partie fixe 42 ou corps du vérin est assujettie au fond du logement, tandis que la partie mobile 44 ou tige du vérin est fixée à la partie arrière 24b.

Sur cette figure, la partie arrière 24b n'est pas translatée et est agencée contre la partie avant 24a en position repliée (vérin rétracté).

Sur la figure 5, la sortie de la tige 44 du vérin est commandée et la partie arrière 24b se déploie, créant ainsi l'ouverture 28 dans la paroi de la nacelle, à partir de la jonction entre les parties amont 24a et aval 24b.

On notera que plusieurs vérins de ce type sont par exemple aménagés sur la circonférence de la partie de paroi amont 24a pour translater efficacement la partie arrière.

L'invention s'applique également à des turbomachines à haut ou à très haut taux de dilution équipées de tuyères à section variable qui ne sont pas du type à translation.

On notera qu'une tuyère à section variable équipant de telles turbomachines permet de s'adapter aux différentes phases de fonctionnement de l'avion (vol de croisière, basse vitesse).

L'intégration de systèmes à tuyère variable sur des turbomachines à haut taux de dilution en améliore significativement les performances thermodynamiques.

En effet, sur les turbomachines montées sur avions de ligne et ayant des taux de dilution très élevés (proches de 10), le taux de compression de la soufflante, principal contributeur à la poussée totale de la turbomachine, est faible (aux alentours de 1,4). Il s'ensuit une augmentation de la sensibilité des performances aérodynamiques de cette soufflante vis-à-vis de la vitesse de vol de l'avion (vitesse sonique).

Dans le cas d'une turbomachine à très haut taux de dilution non équipée de système à tuyère variable, le choix de la ligne de fonctionnement aérodynamique de la soufflante est un compromis entre l'efficacité aérodynamique en vol de croisière et la marge au pompage (phénomènes instationnaires préjudiciables à l'intégrité du moteur) aux basses vitesses de vol.

Dans le cas d'une turbomachine à très haut taux de dilution équipée cette fois-ci d'un système à tuyère variable, un tel compromis n'est pas nécessaire du fait de l'adaptation de la section de sortie de la tuyère au régime de fonctionnement de la soufflante. L'efficacité en est alors augmentée dans chaque phase de vol.

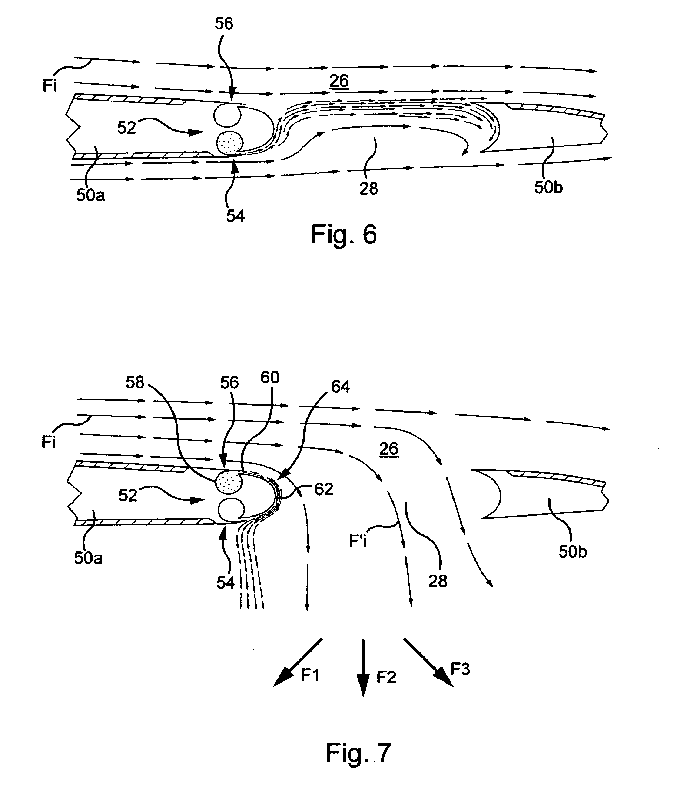

Selon un deuxième mode de réalisation, les figures 6 et 7 représentent, de façon analogue à la figure 3, la structure d'une paroi amont 50a de nacelle ménageant, avec une paroi aval 50b de nacelle translatée vers l'arrière, une ou plusieurs ouvertures radiales dont une seule 28 est représentée.

Sur ces figures, la paroi amont 50a de nacelle intègre un dispositif fluidique 52 qui diffère du dispositif 30 des figures 2 et 3.

Dans ce deuxième mode de réalisation, les autres éléments de la nacelle restent identiques à ceux décrits en référence aux figures 2 et 3.

Le dispositif 52 est en fait un double système de circulation contrôlée qui comporte, d'une part, un premier dispositif 54 de formation d'une barrière fluidique identique au dispositif 30 des figures 2 et 3 et, d'autre part, un second dispositif fluidique 56 indépendant du premier et qui, dans l'exemple considéré, assure une autre fonction comme on le verra ci-après.

Ces deux dispositifs sont agencés à proximité de la zone de jonction avec la partie de paroi aval 50b lorsque cette dernière est dans la position rétractée représentée en partie haute de la figure 2.

Ainsi, le premier dispositif 54 permet de contrôler la circulation aérodynamique de l'écoulement Fᵢ interne au conduit 26 en limitant, voire en annulant les fuites aérodynamiques qui se produiraient à travers l'ouverture 28 en l'absence du dispositif.

Le second dispositif 56 est disposé dans la paroi de la nacelle, sur la face interne 50c de la partie amont de paroi 50a qui délimite le conduit annulaire 26 à sa périphérie externe.

Ce second dispositif permet, lorsqu'il est activé, de contrôler la circulation aérodynamique de l'écoulement interne Fi en assurant, notamment, la fonction d'inverseur de poussée lorsque le ou les éléments mobiles de la nacelle (ex : partie de paroi aval 50b) sont déployés.

Le double système de circulation contrôlée de fluide assure ainsi deux fonctions distinctes (limitation de fuite et « inversion de poussée ») sans faire intervenir de pièces en mouvement additionnelles, évitant par là même des asservissements supplémentaires.

Plus particulièrement, le dispositif fluidique 56 est prévu pour contrôler le prélèvement d'une quantité ou fraction d'écoulement interne au conduit 26 et pour l'évacuer de façon contrôlée hors de la nacelle, par l'ouverture radiale 28.

A cet effet, le dispositif 56 est apte à injecter dans l'écoulement interne Fi un fluide à haute énergie.

Cette injection de fluide est effectuée de façon sensiblement tangentielle à la face interne 50c, dans une zone de l'écoulement où celui-ci doit être dévié, c'est-à-dire légèrement en amont du bord de fuite de la partie 24a.

Plus particulièrement, le dispositif fluidique 50c comporte un canal d'amenée d'un fluide, qui est par exemple de l'air sous pression provenant du réacteur.

Ce canal d'amenée de fluide comporte une partie non représentée qui communique avec la source d'air sous pression de la turbomachine 16 et une partie annulaire 58 partiellement représentée en coupe sur la figure 7. Ce canal 58 est réalisé de façon identique au canal du dispositif 30 ou 54.

Le dispositif fluidique 56 comporte en outre une ou plusieurs tuyères d'injection 60 qui communiquent avec le canal 58 et débouchent sur la face interne 50c, permettant ainsi d'injecter dans l'écoulement de fluide interne Fi au conduit 26 un fluide à haute énergie à proximité de l'ouverture 28 (figure 7).

Une surface incurvée 62 qui constitue le bord de fuite de la paroi amont 50a et la face d'extrémité de cette paroi est aménagée à la sortie de la tuyère d'injection 60, tangentiellement à cette dernière. Selon la vue en coupe longitudinale des figures 6 et 7, cette surface est par exemple en forme de demi-cercle.

Comme représenté sur les figures 6 et 7, le fluide sous pression véhiculé par le canal est introduit sous la forme d'un jet 64 dans l'écoulement interne de fluide Fi (plus particulièrement, à la périphérie de celui-ci) par la tuyère d'injection 60, tangentiellement à la face interne 50c, et modifie ainsi de façon contrôlée une fraction de cet écoulement.

Le jet ainsi injecté sort de la tuyère avec une orientation donnée tangentiellement à un bord de fuite incurvé qui est ici la surface 62, puis épouse la forme du bord de fuite, comme représenté sur la figure 7, dans la mesure où la force centrifuge qui tend à l'en décrocher est équilibrée par la dépression apparaissant entre la paroi et le jet.

Le jet de fluide injecté est donc dévié par la surface incurvée 62.

Lorsque l'équilibre est rompu, le jet injecté dans l'écoulement se décroche du bord de fuite et forme au point de séparation le point d'arrêt arrière du profil.

Comme représenté sur la figure 7, une partie F'i de l'écoulement interne de fluide Fi est déviée de sa trajectoire sous l'action du jet injecté.

L'apport d'énergie du fluide injecté par la tuyère d'injection 60 permet de contrôler la position du point de séparation.

On notera que l'on contrôle la direction du jet de fluide injecté en faisant varier la position du point de séparation du jet sur la surface 62.

Ainsi, en fonction de la zone de la surface 62 où le jet se détache on oriente différemment la partie F'i d'écoulement prélevé.

Ce point de détachement du jet de fluide, c'est-à-dire l'orientation du jet, varie en fonction d'au moins un des paramètres thermodynamiques et aérodynamiques du fluide, à savoir par exemple la pression et/ou la température et/ou le débit et/ou la vitesse et/ou le taux de turbulence...

A titre d'exemple, en augmentant le débit et la pression du fluide inducteur, le jet de fluide adhère à la surface 62 sur une grande longueur et l'écoulement prélevé Fi est dévié vers l'amont de la nacelle suivant la direction F1 sur la figure 7 (inversion de poussée).

Lorsque la direction donnée à la quantité de fluide prélevée est sensiblement celle indiquée par la flèche F2, à savoir de façon radiale par rapport à l'écoulement longitudinal Fi, alors on annule la poussée directe de l'écoulement prélevé.

En outre, lorsque la quantité d'écoulement interne de fluide prélevée Fi est orientée suivant la direction représentée par la flèche F3, c'est-à-dire vers l'aval de la nacelle, alors on réduit la poussée directe produite par l'écoulement prélevé.

On notera que l'on peut modifier un seul des paramètres thermodynamiques et aérodynamiques, par exemple le débit, pour agir sur la quantité de fluide prélevée.

En faisant varier la taille de l'orifice d'injection en sortie de la tuyère d'injection, par exemple, grâce à un agencement de type diaphragme, on peut faire varier la vitesse d'injection et donc le débit du fluide injecté.

Par ailleurs, l'injection de fluide peut être réalisée soit en flux continu, soit en flux pulsé pour limiter la consommation de fluide injecté.

La réalisation d'un système efficace permettant d'inverser, d'annuler ou de diminuer le vecteur de poussée du système propulsif est réalisée durant certaines phases de vol de l'aéronef, en translatant la partie arrière de la paroi de la nacelle comme représenté sur la figure 7. On dégage ainsi une ou plusieurs ouvertures 28 sur le flanc de la nacelle entre le flux secondaire Fi circulant dans le conduit annulaire 26 et l'atmosphère.

Il convient de remarquer que lorsque la partie arrière 50b de la paroi de la nacelle a été déplacée vers l'arrière, la tuyère de sortie du flux secondaire ne réunit plus les conditions adaptées à la génération d'un vecteur de poussée.

En effet, la tuyère forme alors un divergent et le flux secondaire qui est un écoulement subsonique perd son énergie en sortant de la nacelle.

Le dispositif d'inversion, d'annulation ou de diminution de poussée selon l'invention est plus simple que les systèmes connus dans la mesure où, ici, la seule pièce mobile est la partie arrière de la paroi de la nacelle, ce qui simplifie considérablement la cinématique du dispositif.

Les efforts aérodynamiques liés au fonctionnement du dispositif selon l'invention se concentrent principalement sur le dispositif fluidique agencé de façon annulaire sur la paroi de la nacelle, ce qui permet de mieux répartir dans la structure de la nacelle les efforts à transmettre et, ainsi, de ne pas avoir à surdimensionner certaines parties de la nacelle.

En outre, le dispositif fluidique a tendance à masquer la paroi aval 50b vis-à-vis de l'écoulement environnant, ce qui permet de ne pas avoir à surdimensionner cette dernière.

Par ailleurs, l'intégration du dispositif fluidique sur la paroi de la nacelle n'a que très peu d'influence sur le traitement acoustique interne et externe de cette dernière.

En effet, dans la position repliée représentée en partie haute de la figure 2, le dispositif selon l'invention autorise l'intégration d'un revêtement acoustique pariétal sur la quasi-totalité des faces interne et externe de la paroi de la nacelle.

En outre, la taille du dispositif fluidique est relativement petite ce qui facilite son intégration dans cette dernière.

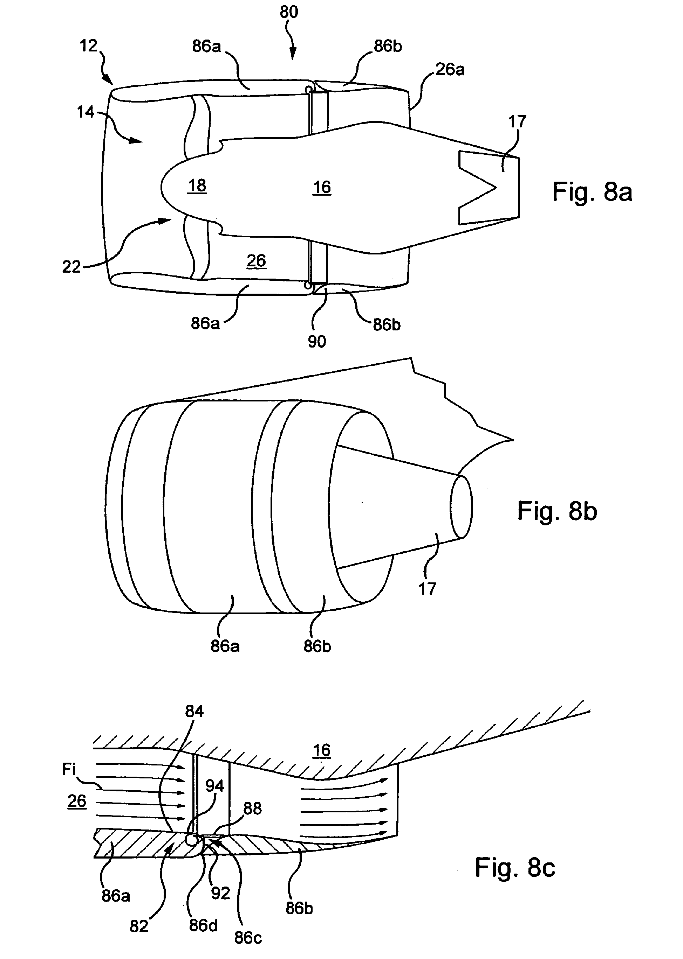

Les figures 8a, 8b, 8c, 9a, 9b, 9c et 10a, 10b, 10c illustrent deux modes de fonctionnement différents d'un troisième mode de réalisation de l'invention.

Les figures 8a, 8b et 8c représentent différentes vues d'une nacelle de réacteur d'aéronef 80 du type de celle de la figure 2 : en coupe longitudinale (fig. 8a), en perspective (fig. 8b) et selon une vue partielle agrandie (fig. 8c).

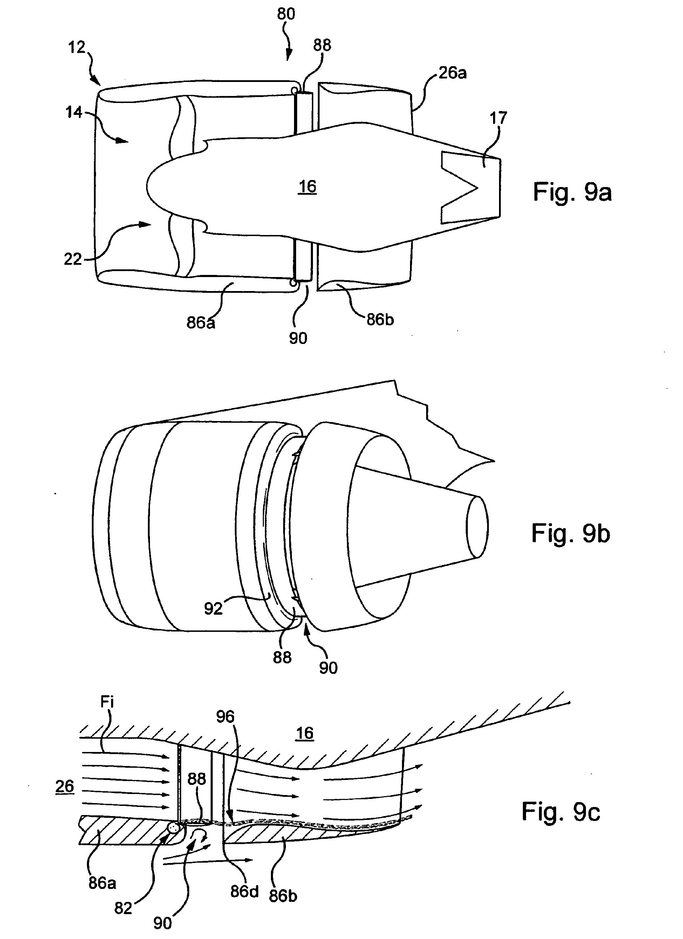

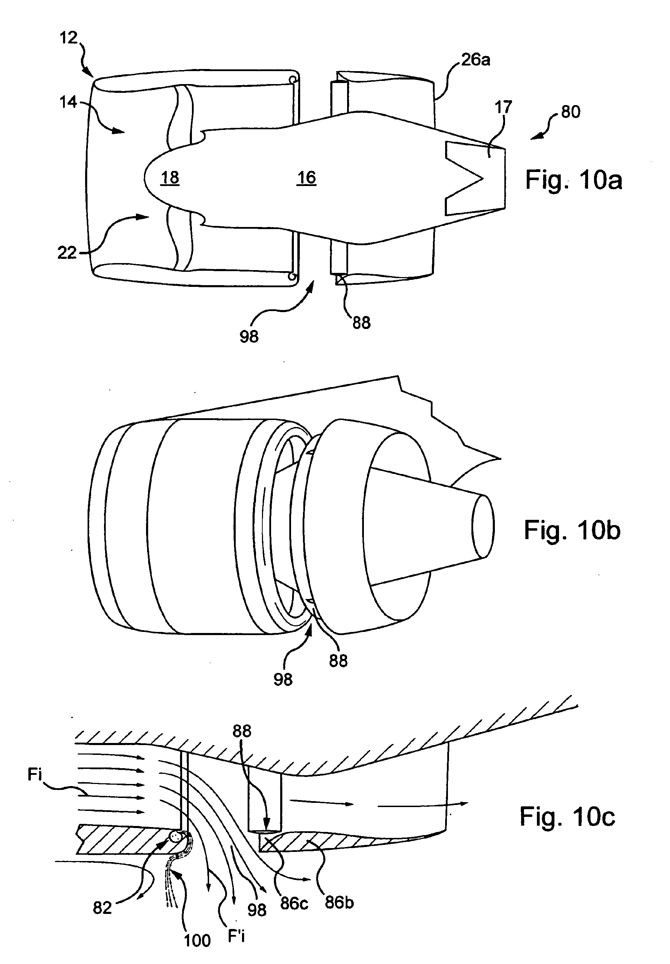

Sur les figures 8a-c le système à tuyère variable est replié, tandis qu'il est déployé sur les figures 9a-c et 10a-c.

Sur les figures 9a-c, un dispositif fluidique de formation d'une barrière fluidique est activé et coopère avec un élément de canalisation mobile afin de limiter, voire d'empêcher la formation d'un écoulement de fuite.

Sur les figures 10a-c, l'élément de canalisation mobile a été déplacé afin de ne plus être associé au dispositif fluidique et ce dernier assure une fonction de prélèvement contrôlé d'au moins une partie de l'écoulement interne Fi, comme le dispositif fluidique 56 sur la figure 7.

La nacelle illustrée sur les figures 8a-c, 9a-c et 10a-c diffère de celle de la figure 2 par la présence des éléments suivants :
- un dispositif fluidique 82 est agencé sur la face interne 84 d'une partie amont 86a de paroi de nacelle, comme le dispositif 56 de la figure 7, et contrôle la circulation aérodynamique de l'écoulement interne Fi au niveau de la zone située entre les éléments fixes et mobiles de la nacelles;
- un ou plusieurs éléments de déflection 88 (déflecteur(s) aérodynamique(s)) mobiles sont prévus pour coopérer soit avec le dispositif fluidique 82 (figs. 9a-c) soit avec la partie aval mobile 86b de paroi de nacelle (figs. 8a-c et 10a-c) dont la forme a été adaptée à cet effet.

Les éléments mobiles de la nacelle que sont la partie aval 86b et le ou les éléments de déflection 88 possèdent au moins un degré de liberté en translation suivant l'axe de la turbomachine et forment, notamment, le carénage aérodynamique externe et/ou interne du flux au niveau de la tuyère.

L'élément de déflection 88 distinct de la partie de paroi amont 86a est, par exemple, un volet ou déflecteur aérodynamique qui a une forme annulaire et cet élément mobile est positionné dans le prolongement de la face interne des parties de paroi amont et aval de la nacelle, afin d'être agencé à la périphérie de l'écoulement interne Fi.

Plusieurs éléments de déflection en forme chacun de portion ou de secteur d'anneau peuvent alternativement être utilisés au lieu d'un élément unique.

Dans la position illustrée sur les figures 8a-c, le volet 88 est en position repliée contre la partie fixe 86a de la nacelle, de même que la partie aval 86 de la paroi de la nacelle.

Cette partie aval 86b est d'ailleurs configurée de façon à pouvoir venir en contact avec la partie fixe 86a, malgré la présence du volet 88.

A cet égard, la partie aval 86b possède, à sa partie amont située en vis-à-vis de la partie de paroi 86a, un évidement 86c lui conférant une forme évasée sensiblement tronconique dans laquelle vient se loger le volet 88. L'extrémité de cette partie amont évasée constitue le bord d'attaque 86d de la partie de paroi aval 86b, lequel vient contre la partie de paroi amont 86a.

Les éléments mobiles 88 et 86b sont ainsi positionnés contre la partie fixe de la nacelle de manière que les lignes aérodynamiques soient continues.

Durant les phases de vol où le mécanisme de la tuyère variable est mis en oeuvre, une partie des éléments mobiles de la nacelle, à savoir la partie aval 86b, est déplacée vers l'arrière par translation longitudinale (figs 9a-c) afin de réaliser la variation de section de la tuyère.

Ce déplacement dégage sur les flancs de la nacelle une ou plusieurs ouvertures radiales, en l'occurrence une seule 90 dans cet exemple de réalisation.

L'autre partie des éléments mobiles de la nacelle, à savoir l'élément 88 reste, quant à lui, dans la position repliée des figures 8a-c, contre la partie fixe 86a de la paroi de nacelle. Plus particulièrement, l'élément 88 est disposé contre la surface incurvée 92, aménagée tangentiellement à l'extrémité débouchante des moyens d'injection 94 (tuyère d'injection) du dispositif fluidique 82.

Cette surface est identique à la surface 62 de la figure 7.

Comme représenté sur les figures 9a-c, par suite du déplacement arrière de la partie aval 86b, l'élément 88 est disposé dans l'ouverture 90 qui s'est formée et en obture une zone dite amont. Une zone dite aval de cette ouverture située entre l'élément 88 et la partie aval 86b est dégagée.

Le déplacement de la partie aval 86b déclenche, par exemple, l'activation du dispositif fluidique 82, par exemple, par l'intermédiaire d'un capteur optique.

Cette activation peut toutefois être commandée à distance (par exemple dans le poste de pilotage) avec la commande de mise en oeuvre du mécanisme de la tuyère variable.

Ainsi, le jet de fluide à haute énergie 96 issu des moyens d'injection 94 est dévié par l'élément déflecteur 88 dans une direction longitudinale, au lieu de se coller à la surface 92 comme le fait le jet 64 sur la surface 62 de la figure 7.

L'élément 88 canalise ensuite le jet 96 à l'intérieur du conduit annulaire 26 et ce jet poursuit sa trajectoire sensiblement longitudinale au-delà de l'élément 88, c'est-à-dire dans la zone de l'ouverture qui est libre de tout obstacle matériel.

De cette manière, la circulation aérodynamique de l'écoulement interne Fi est contrôlée au droit de l'ouverture 90 par limitation, voire suppression des écoulements indésirables à travers cette dernière (écoulement de fuite).

En effet, le volet déflecteur 88 forme à lui seul un obstacle vis-à-vis de l'écoulement interne Fi, empêchant ainsi une partie de ce dernier de s'échapper à travers la zone amont de l'ouverture annulaire 90.

Par ailleurs, l'injection de fluide réalisée tangentiellement au volet déflecteur permet, de façon générale, de contrôler la circulation aérodynamique à l'endroit de l'ouverture 90 et de limiter, par induction aérodynamique, la tendance naturelle d'une partie de l'écoulement interne Fi à s'échapper par cette ouverture.

Plus particulièrement, le jet de fluide injecté 96 s'étend longitudinalement le long de l'ouverture 90. Ce jet canalise l'écoulement interne Fi sur toute la longueur de l'ouverture radiale, c'est-à-dire le long de la zone amont de cette ouverture là où est positionné le guide 88 et le long de la zone aval dégagée.

Dans ce mode de réalisation le jet injecté longe l'entrée de l'ouverture sans pénétrer à l'intérieur de celle-ci comme sur les figures 3 et 6.

Ainsi, le jet 96 forme une barrière fluidique annulaire qui entoure l'écoulement interne Fi au droit de l'ouverture 90 et l'élément 88 agit comme un support guide pour ce jet.

On notera que l'élément déflecteur 88 ne peut occuper toute la longueur de l'ouverture radiale 90 car un tel dimensionnement nuirait au fonctionnement en « inverseur de poussée » qui est illustré sur les figures 10a-c.

On notera que les éléments mobiles de la nacelle se déplacent de façon continue ou non grâce à un système d'asservissement. A titre d'exemple de réalisation non exhaustif, la partie de paroi aval 86b peut être actionnée par un ou plusieurs vérins linéaires de type hydraulique commandés par le système de contrôle moteur. Quant à la partie 88, elle peut également être actionnée par un ou plusieurs vérins linéaires de type hydraulique commandés par le système de contrôle moteur. Ces dispositifs d'asservissement peuvent être, d'une part, fixés sur des zones renforcées structurellement des éléments mobiles et, d'autre part, sur un cadre structurel fixe de la nacelle moteur.

Les figures 10a-c illustrent le fonctionnement de la nacelle en « inverseur de poussée », mode qui est utilisé lors de certaines phases du vol de l'aéronef équipé de telles nacelles.

Lorsque ce mode opératoire est commandé, la partie aval 86b de la paroi de nacelle est davantage translatée vers l'arrière de la nacelle et l'élément déflecteur 88 est également translaté vers l'aval. Il est dégagé de la surface 92 et rejoint cette partie aval 86b pour se loger dans l'évidement 86c.

Une ouverture radiale 98 de plus grande longueur que l'ouverture 90 est ainsi créée et est bordée, d'un côté, par la surface incurvée d'extrémité 92 de la partie fixe 86a et, de l'autre côté, par les éléments mobiles 86b et 88.

A titre d'exemple, la longueur axiale de l'ouverture 90 est comprise dans une gamme de l'ordre de 50 à 200 mm, tandis que celle de l'ouverture 98 est comprise dans une gamme de l'ordre de 450 à 600 mm.

On notera que l'élément 88 peut être pourvu d'une extension radiale de forme concave qui s'étend à l'intérieur de l'ouverture 98, de manière à conférer à l'ensemble d'éléments 86b et 88 une surface d'extrémité analogue à la surface concave 24d de la figure 2 en vue d'améliorer les lignes aérodynamiques internes.

Dès lors que les éléments mobiles sont dans la position extrême de la figure 10c, le dispositif fluidique 82 est activé et se comporte alors comme un dispositif de prélèvement contrôlé d'une partie F'i d'écoulement interne Fi, de façon identique au dispositif 56 de la figure 7, et génère un jet contrôlé 100.

On obtient ainsi une inversion, une annulation ou une diminution du vecteur poussée du système propulsif selon le but recherché.

On notera que la présence de moyens d'injection d'un fluide à haute énergie agencés sur la face interne de la paroi de la nacelle, en amont de la ou des ouvertures, et d'un élément déflecteur en aval de ces moyens permet de remplir deux fonctions avec un seul système d'injection.

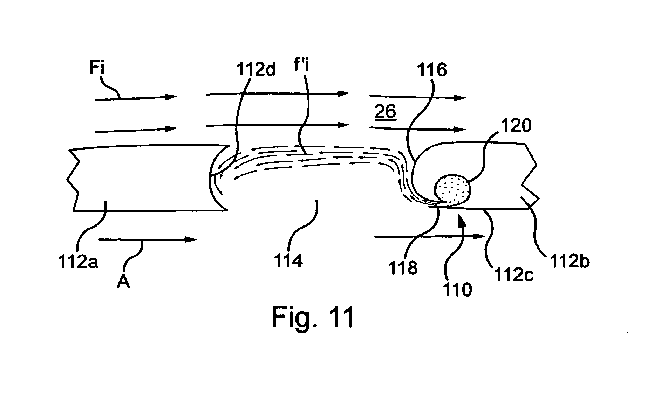

La figure 11 illustre un dernier mode de réalisation dans lequel la nacelle de réacteur est identique à celle représentée en figure 2, à l'exception du dispositif fluidique.

En effet, sur la figure 11 le dispositif fluidique 110 de formation d'une barrière fluidique fᵢ est intégré dans la partie de paroi aval 112b. La partie aval 112b s'est écartée de la partie fixe amont 112a sous l'action de moyens d'entrainement, tels que ceux des figures 4 et 5, ménageant ainsi, entre les faces d'extrémité respectives complémentaires des deux parties 112a et 112b, une ou plusieurs ouvertures 114.

Le dispositif 110 est agencé sur la face externe 112c de la partie aval 112b, au niveau du bord d'attaque (face d'extrémité) de cette dernière.

Le dispositif 110 comporte une surface incurvée 116 disposée tangentiellement à l'extrémité débouchante de la tuyère d'injection 118.

La tuyère 118 communique avec un canal d'amenée du fluide à haute énergie à injecter, dont une partie 12a s'étend à l'intérieur de la partie aval 112b.

Le fluide est injecté dans l'ouverture 114, de façon continue ou pulsée, sous la forme d'un jet et, grâce à la surface incurvée tangentielle 116, le jet est dirigé de façon contrôlée vers le conduit annulaire 26 en suivant d'abord une partie de la surface 116 jusqu'au point de détachement prédéterminé.

Le jet ainsi détaché de la surface se dirige vers la partie amont de paroi 112a en longeant à contre sens l'écoulement interne Fi et vient ensuite lécher la face d'extrémité 112d de la partie 112a, puis sort de l'ouverture pour rejoindre l'écoulement d'air externe A.

Une circulation contrôlée de fluide s'établit ainsi dans l'ouverture 114 suivant toute son extension longitudinale et forme une barrière fluidique f'i au sein de l'ouverture afin de limiter, voire d'empêcher, le passage de l'écoulement de fuite par l'ouverture.

La nacelle selon ce quatrième mode de réalisation de l'invention procure les mêmes avantages que ceux de la nacelle des figures 2 à 5.

On notera que les obstacles fluidiques formés sur les figures 3 et 11 sont plutôt localisés vers l'entrée de l'ouverture, c'est-à-dire du côté de l'ouverture le long duquel est situé l'écoulement interne Fᵢ. Ainsi, l'obstacle fluidique se comporte comme une paroi de fluide le long de laquelle l'écoulement interne est guidé, sans pouvoir pénétrer dans l'ouverture.

A titre de variante, une nacelle de réacteur d'aéronef peut comporter, d'une part, une paroi amont fixe équipée d'un dispositif fluidique du type du dispositif 82 des figures 10a-c pour exercer un prélèvement contrôlé d'écoulement interne et, d'autre part, une paroi aval mobile équipée d'un dispositif fluidique du type du dispositif 110 de la figure 11 pour former une barrière fluidique.

Les deux différentes fonctions sont ainsi assurées uniquement par injection contrôlée de fluide à haute énergie, sans pièces mobiles supplémentaires.

## Revendications

1. Nacelle de réacteur d'aéronef (10) à haut taux de dilution dans laquelle est installé un réacteur d'axe longitudinal (X), la nacelle (12) comportant une paroi (24) entourant de façon concentrique au moins partiellement le réacteur et définissant avec ce dernier un conduit annulaire (26) d'écoulement interne de fluide présentant, à une extrémité dite aval de la paroi de la nacelle, une section de passage de sortie d'écoulement, la nacelle comportant des moyens de déplacement (40) suivant l'axe longitudinal, sur commande, d'une partie (24b) de la paroi de la nacelle pour faire varier la section de passage de sortie d'écoulement, ce déplacement longitudinal créant dans la paroi de la nacelle au moins une ouverture ayant une dimension longitudinale (28) à travers laquelle s'échappe naturellement de façon radiale une partie de l'écoulement interne qualifiée d'écoulement de fuite, l'autre partie de l'écoulement interne guidée par la paroi de la nacelle contribuant à la poussée du réacteur, **caractérisée en ce que** la nacelle comporte un dispositif (30) de formation d'une barrière fluidique (fi) qui s'étend suivant au moins une partie de la dimension longitudinale de ladite au moins une ouverture (28), la barrière fluidique s'opposant ainsi à l'échappement naturel, à travers ladite au moins une ouverture, d'au moins une partie de l'écoulement de fuite.

2. Nacelle selon la revendication 1, **caractérisée en ce que** le dispositif de formation d'une barrière fluidique comporte des moyens d'injection (34) d'un fluide à haute énergie au droit de ladite au moins une ouverture.

3. Nacelle selon la revendication 1 ou 2, **caractérisée en ce que** la nacelle comporte également un dispositif fluidique (56 ; 82) de prélèvement contrôlé d'au moins une partie d'écoulement interne de fluide pour l'évacuer hors de la nacelle à travers ladite au moins une ouverture (28 ; 98).

4. Nacelle selon la revendication 3, **caractérisée en ce que** le dispositif fluidique de prélèvement contrôlé comporte des moyens d'injection (60) d'un fluide à haute énergie dans l'écoulement interne de fluide.

5. Nacelle selon la revendication 2 ou 4, **caractérisée en ce que** les moyens d'injection sont agencés en amont et/ou en aval de ladite au moins une ouverture (28 ; 98).

6. Nacelle selon l'une des revendications 2, 4, 5, **caractérisée en ce que** des moyens d'injection sont agencés sur une face interne (50c) et/ou sur une face externe (31 ; 112c) de la paroi de la nacelle qui délimite le conduit annulaire (26) à sa périphérie externe.

7. Nacelle selon la revendication 6, **caractérisée en ce que** le dispositif de formation d'une barrière fluidique comporte au moins un élément (88) de déflection mobile du fluide injecté qui est disposé de façon adjacente aux moyens d'injection agencés sur la face interne de la paroi de la nacelle, au moins en partie dans ladite au moins une ouverture (90).

8. Nacelle selon la revendication 7, **caractérisée en ce que** ledit au moins un élément de déflection (88) obture une zone dite amont de ladite au moins une ouverture, laissant ainsi libre une zone dite aval de celle-ci.

9. Nacelle selon l'une des revendications 2 à 8, **caractérisée en ce que** les moyens d'injection comportent au moins une tuyère d'injection (34 ; 60) d'un fluide à haute énergie.

10. Nacelle selon l'une des revendications 2 à 9, **caractérisée en ce que** le dispositif comporte une surface incurvée (35 ; 62 ; 92 ; 116), aménagée tangentiellement à l'extrémité débouchante des moyens d'injection (34 ; 94 ; 60 ; 118), de façon à diriger le fluide injecté vers ladite au moins une ouverture (28 ; 98 ; 114).

## Claims

1. An aircraft engine nacelle (10) having a high bypass ratio, in which there is installed an engine with longitudinal axis (X), the nacelle (12) comprising a wall (24) concentrically surrounding the engine at least partially and defining therewith an annular internal fluid flow conduit (26) having, at a so-called downstream end of the nacelle wall, a flow-outlet passage cross section, the nacelle comprising means (40) for displacement along the longitudinal axis, on command, of a part (24b) of the nacelle wall in order to vary the flow-outlet passage cross section, this longitudinal displacement creating, in the nacelle wall, at least one aperture (28) of longitudinal extension through which naturally escapes, radially, part of the internal flow referred to as leakage flow, the other part of the internal flow guided by the wall of the nacelle contributing to the thrust of the engine, **characterized in that** the nacelle comprises a device (30) for forming a fluidic barrier (fi), which extends along at least part of the longitudinal extension of the said at least one aperture (28), the fluidic barrier thus opposing the natural escape, through the said at least one aperture, of at least part of the leakage flow.

2. A nacelle according to claim 1, **characterized in that** the device for forming a fluidic barrier comprises means (34) for injection of a high-energy fluid opposite said at least one aperture.

3. A nacelle according to claim 1 or 2, **characterized in that** the nacelle also comprises a fluidic device (56; 82) for controlled withdrawal of at least part of the internal fluid flow in order to evacuate it from the nacelle through the said at least one aperture (28; 98).

4. A nacelle according to claim 3, **characterized in that** the fluidic device for controlled withdrawal comprises means (60) for injection of a high-energy fluid into the internal fluid flow.

5. A nacelle according to claim 2 or 4, **characterized in that** the injection means are arranged upstream and/or downstream from the said at least one aperture (28; 98).

6. A nacelle according to one of claims 2, 4 or 5, **characterized in that** the injection means are arranged on an internal face (50c) and/or on an external face (31; 112c) of the nacelle wall that bounds the annular conduit (26) at its external periphery.

7. A nacelle according to claim 6, **characterized in that** the device for forming a fluidic barrier comprises at least one mobile member (88) for deflecting the injected fluid, which is disposed adjacent to the injection means which are arranged on the internal face of the nacelle wall, at least partly in the said at least one aperture (90).

8. A nacelle according to claim 7, **characterized in that** the said at least one deflecting member (88) blocks a so-called upstream zone of the said at least one aperture, thus leaving free a downstream zone thereof.

9. A nacelle according to one of claims 2 to 8, **characterized in that** the injection means comprise at least one nozzle (34; 60) for injecting a high-energy fluid.

10. A nacelle according to one of claims 2 to 9, **characterized in that** the device has a curved surface (35; 62; 92; 116), provided tangentially at the discharging end of the injection means (34; 94; 60; 118), in such a way as to direct the injected fluid toward the said at least one aperture (28; 98; 114).

## Patentansprüche

1. Triebwerksgondel für Luftfahrzeug (10) mit hohem Mantelstromverhältnis, in die ein Triebwerk mit der Längsachse (X) eingebaut ist, wobei die Gondel (12) eine Wand (24) aufweist, die das Triebwerk zumindest teilweise konzentrisch umgibt und mit letzterem eine ringförmige Strömungsleitung (26) für die innere Fluidströmung definiert, die an einem, dem sogenannten stromabwärtigen Ende der Wand der Gondel einen Durchtrittsquerschnitt für den Strömungsaustritt aufweist, wobei die Gondel Mittel (40) zur Verlagerung eines Teils (24b) der Wand der Gondel auf Befehl entlang der Längsachse aufweist, um den Durchtrittsquerschnitt für den Strömungsaustritt zu verändern, wobei mit dieser Längsverlagerung in der Wand der Gondel zumindest eine Öffnung mit einer Längsabmessung (28) erzeugt wird, durch welche ein mit Leckageströmung bezeichneter Teil der inneren Strömung in natürlicher Weise radial ausströmt, wobei der andere Teil der inneren Strömung, der von der Wand der Gondel geführt wird, zur Schubkraft des Triebwerks beiträgt,
**dadurch gekennzeichnet, dass** die Triebwerksgondel eine Vorrichtung (30) zum Bilden einer strömungstechnischen Sperre (fi) aufweist, die sich zumindest entlang eines Teils der Längsabmessung der zumindest einen Öffnung (28) erstreckt, wobei die strömungstechnische Sperre somit dem natürlichen Ausströmen zumindest eines Teils der Leckageströmung durch die zumindest eine Öffnung entgegenwirkt.

2. Gondel nach Anspruch 1,
**dadurch gekennzeichnet, dass** die Vorrichtung zum Bilden einer strömungstechnischen Sperre Mittel (34) zum Einspritzen eines Fluids mit hoher Energie im Bereich der zumindest einen Öffnung aufweist.

3. Gondel nach Anspruch 1 oder 2,
**dadurch gekennzeichnet, dass** die Gondel auch eine strömungstechnische Vorrichtung (56; 82) zur kontrollierten Entnahme von zumindest einem Teil der inneren Fluidströmung aufweist, um diesen durch die zumindest eine Öffnung (28; 98) aus der Gondel auszuleiten.

4. Gondel nach Anspruch 3,
**dadurch gekennzeichnet, dass** die strömungstechnische Vorrichtung zur kontrollierten Entnahme Mittel (60) zum Einspritzen eines Fluids mit hoher Energie in die innere Fluidströmung aufweist.

5. Gondel nach Anspruch 2 oder 4,
**dadurch gekennzeichnet, dass** die Einspritzmittel der zumindest einen Öffnung (28; 98) vorgelagert und/oder nachgelagert angeordnet sind.

6. Gondel nach einem der Ansprüche 2, 4, 5,
**dadurch gekennzeichnet, dass** die Einspritzmittel auf einer Innenseite (50c) und/oder auf einer Außenseite (31; 112c) der Wand der Gondel angeordnet sind, welche die ringförmige Leitung (26) an ihrem Außenumfang begrenzt.

7. Gondel nach Anspruch 6,
**dadurch gekennzeichnet, dass** die Vorrichtung zum Bilden einer strömungstechnischen Sperre zumindest ein Teil (88) zur verstellbaren Ablenkung des eingespritzten Fluids aufweist, das angrenzend an die auf der Innenseite der Wand der Gondel angeordneten Einspritzmittel zumindest teilweise in der zumindest einen Öffnung (90) angeordnet ist.

8. Gondel nach Anspruch 7,
**dadurch gekennzeichnet, dass** das zumindest eine Ablenkteil (88) einen sogenannten stromaufwärtigen Bereich der zumindest einen Öffnung verschließt und dabei einen sogenannten stromabwärtigen Bereich derselben freilässt.

9. Gondel nach einem der Ansprüche 2 bis 8,
**dadurch gekennzeichnet, dass** die Einspritzmittel zumindest eine Einspritzdüse (34; 60) zum Einspritzen von Fluid mit hoher Energie aufweisen.

10. Gondel nach einem der Ansprüche 2 bis 9,
**dadurch gekennzeichnet, dass** die Vorrichtung eine bogenförmige Fläche (35; 62; 92; 116) aufweist, die tangential zum offenen Ende der Einspritzmittel (34; 94; 60; 118) angeordnet ist, so dass das eingespritzte Fluid zur zumindest einen Öffnung (28; 98; 114) geleitet wird.
